# EUROPEAN PATENT APPLICATION

(11) **EP 1 985 986 A1**
(43) Date of publication of application: **29.10.2008**
(21) Application number: 07707847.5
(22) Date of filing: 01.02.2007
(51) Int. Cl.: G01N 1/22, G01N 30/06, G01N 30/18, G01N 30/88, G01N 31/00

(54) **FIBER-PACKED NEEDLE FOR ALDEHYDE/KETONE ANALYSIS, ANALYTICAL APPARATUS, AND ANALYTICAL METHOD**

(30) Priority: 01.02.2006 JP 2006024829
(71) Applicant: Shinwa Chemical Industries, Ltd., Kyoto-Shi, Kyoto 612-8307 (JP)
(72) Inventor: WADA, Hiroo c/o SHINWA CHEMICAL INDUS. LTD.,, Fushimi-ku, Kyoto-shi,Kyoto 612-8307 (JP)
(74) Representative: Vossius & Partner
(86) International application number: PCT/JP2007/051661
(87) International publication number: WO 2007/088916

(57) **Abstract**

Provided are a simple method for analyzing aldehydes and ketones in a sample, which does not require a complicated operation such as extraction with a solvent and concentration of the extract; and an analytical apparatus and a fiber-packed needle which are used in the analytical method. Also provided a fiber coated with hydrochloride or sulfate of 2,4-dinitrophenylhydrazine; a needle for microextraction in which the fibers are packed; the analytical apparatus including this needle and a suction device; the method for analyzing aldehydes and ketones in a sample, **characterized by** comprising sucking the sample through the needle in this analytical apparatus to allow the aldehydes and ketones in the sample to react with 2,4-dinitrophenylhydrazine, thereby converting them to the corresponding 2,4-dinitrophenylhydrazones; desorbing the 2,4-dinitrophenylhydrazones; and introducing the desorbed 2,4-dinitrophenylhydrazones into a chromatograph to analyze them.

## Description

### Technical Field

The present invention relates to a fiber coated with 2,4-dinitrophenylhydrazine or a salt thereof, a needle for microextraction in which the fibers are packed, an analytical apparatus comprising the needle and a suction device, and a method for analyzing aldehydes and ketones in a sample using the analytical apparatus.

### Background Art

Formaldehyde and acetaldehyde, the causative substances of sick house, which have currently become a social problem, are considered difficult to be concentrated because of their low boiling points. Accordingly, conversion of these aldehydes to 2,4-dinitrophenylhydrazone using 2,4-dinitrophenylhydrazine and concentration thereof are generally carried out simultaneously. That is, a method in which a gas sample, for example air, is subjected to bubbling by passing the gas through an acid solution to which 2,4-dinitrophenylhydrazine is dissolved, followed by extraction and concentration of the resultant hydrazones with an organic solvent; a method in which silica gel impregnated with 2,4-dinitrophenylhydrazine is packed in a glass tube, and air is sucked into the glass tube, followed by extraction of the resultant hydrazones with acetonitrile; or the like is employed. These methods, however, are complicated in that the solvent used for extraction needs to be concentrated and injected into an analytical apparatus (Non-patent Document 1).

Non-patent Document 1: "Performance Test and Evaluation Procedure Manual for Formaldehyde-Emitting Building Materials" issued on April 19, 2004 by JTCCM (Japan Testing Center for Construction Materials).

### Disclosure of the Invention

### Problems to be Solved by the Invention

An object of the present invention is to provide a simple method for analyzing aldehydes and ketones in a sample, which method does not require a complicated operation including extraction with a solvent and concentration thereof.
Another object of the present invention is to provide an analytical apparatus and a fiber-packed needle used for the above analytical method.

### Means for Solving the Problems

The present invention provides the following fiber, a needle for microextraction in which the fibers are packed, an analytical apparatus comprising the needle and a suction device, and a method for analyzing aldehydes and ketones in a sample using this analytical apparatus.
1. A fiber coated with 2,4-dinitrophenylhydrazine or a salt thereof.
2. A fiber coated with hydrochloride or sulfate of 2,4-dinitrophenylhydrazine.
3. A needle for microextraction, in which the fibers according to the above item 1 or 2 are packed.
4. The needle according to the above item 3, which is for extracting aldehydes and ketones.
5. An analytical apparatus comprising said needle according to the above item 3 or 4 and a suction device.
6. A method for analyzing an aldehyde(s) and/or ketone(s) in a sample, characterized by comprising sucking a sample through said needle in the analytical apparatus according to the above item 5 to allow said aldehyde(s) and ketone(s) in said sample to react with 2,4-dinitrophenylhydrazine, thereby converting them to the corresponding 2,4-dinitrophenylhydrazones; desorbing said 2,4-dinitrophenylhydrazones; and introducing the desorbed 2,4-dinitrophenylhydrazones into a chromatograph to analyze them.
7. The method according to the above item 6, wherein formaldehyde in said sample is analyzed.

### Effects of the Invention

According to the present invention, aldehydes and ketones in a sample can be simply analyzed without requiring a complicated operation including extraction with a solvent and concentration of the extract.

### Best Modes for Carrying Out the Invention

The present invention will be explained in detail below.
Examples of 2,4-dinitrophenylhydrazine or a salt thereof used in the present invention include 2,4-dinitrophenylhydrazine, and hydrochloride, sulfate and phosphate thereof, and the like.
Examples of the fiber used as the fiber coated with 2,4-dinitrophenylhydrazine or a salt thereof of the present invention include silica wools, stainless fibers, high-strength polymers, heat-resistant polymers, durable polymers, and the like.
Specific examples of such polymers include aramid fibers (for example, PPTA fibers (for example, Kevler (registered trademark)), Technora (registered trademark) and the like); wholly aromatic polyesters (polyallylate) (for example, Vectran (registered trademark), Ekonol (registered trademark) and the like); aromatic polymers having heterocyclic ring(s) and other rod type polymers (for example, poly(p-phenylenebenzobisoxazole)(PBO) (for example, Zylon (registered trademark) and the like), polybenzimidazole (PBI), polybenzobisthiazole (PBT) and the like); polyimides; polyalkylenes (for example, polyethylene, polypropylene and the like); polyoxyalkylenes (for example, polyoxymethylene); polyvinyl alcohol; nylon (for example, Nylon 6, Nylon 66 and the like); polyesters (for example, polyethylene terephthalate and the like), carbon fibers, cellulose acetate, and combination of two or more of these and the like.

The fiber used in the present invention is preferably 100 nm to 100 µm in diameter, more preferably 500 nm to 15 µm. Although the length of the fiber is not restricted as long as it is the same length or longer as that of the needle, it is usually 1 µm to 100 m, preferably 1 mm to 10 m. The cross section of the fiber may be in any form such as circle, triangles, quadrangles, other polygons, V-forms, Y-forms, stars and the like.
When the fibers are packed in the needle, it is preferred that wash treatment with an appropriate solvent, heat treatment and the like be carried out to remove impurities which have attached on the surface of the fibers or contaminated in the fibers during manufacturing the fibers.

The needle used in the present invention can be made with any material as long as it is a material which does not interact with an analyte, extraction medium and elution medium, and examples of the material include molten silicas, glasses, plastics, metals, alloys, composite materials and the like. The internal diameter of the needle is usually 500 nm to 600 µm, preferably 1 to 600 µm, more preferably 450 to 500 µm, and the outer diameter is usually 170 to 800 µm, preferably 200 to 800 µm, more preferably 650 to 700 µm depending on the material used for making the needle.

The fibers are preferably packed along with the longitudinal direction of the needle, and the total number of the fibers packed is usually 10 to 3000, preferably 100 to 2000, more preferably 500 to 1000. If the total number is small, the surface areas of the fibers is small, and separation efficiency, that is, extraction efficiency when the fibers are used as a medium for solid-phase extraction described later, is insufficient. If the total number is too large, there is a problem in that a high pressure is needed to run a fluid.
The diameters of the fibers may be the same or different among the fibers used. The fibers may be twisted or untwisted.
Wash treatment, heat treatment, surface treatment and the like of the fibers may be carried out prior to packing, during packing or after packing the fibers into the needle.
It is also preferred that the surface of the fibers be treated (including chemical modification) with a surface treatment agent including liquids generally used in gas chromatography (GC) such as silicone oil, polyethylene glycol and the like, or the surface be chemically-modified by treating them with an inactivating treatment agent or the like, for example, bistrimethylsilylacetoamide (BSA) and dimethyldichlorosilane (DMCS).

The amount of coated 2,4-dinitrophenylhydrazine or a salt thereof with regard to the fibers is not restricted. Usually, the amount of 2,4-dinitrophenylhydrazine is preferably 0.001 to 1 percent by mass, more preferably 0.005 to 0.025 percent by mass. The coated amount may be adjusted such that the amount of 2,4-dinitrophenylhydrazine or a salt thereof present in the needle is preferably 1 to 1000ng, more preferably 150 to 500 ng as 2,4-dinitrophenylhydrazine.

The suction device used for the analytical apparatus comprising the needle of the present invention and a suction device is not restricted to specific one as long as it has a function to suck a sample and introduce it into the needle. For example, a conventional injection needle (syringe) can be used. Although the volume of the syringe is not restricted, it is usually 10 to 1000 mL, preferably 50 to 100 mL. When a sample containing analytes of low concentration is analyzed, a larger-volume syringe and a smaller-volume syringe are prepared, the needle is first attached to the end of the larger-volume syringe, and a larger amount of liquid or gas sample are sucked to react the analytes in the sample to obtain 2,4-dinitrophenylhydrazone derivatives. In this case, a vacuum pump may also be used for suction. Although the volumes of the larger-volume syringe and the smaller-volume syringe are also not restricted, about 10 to 500 ml and about 1 to 5 ml, respectively, are convenient for carrying.

In the analytical method of the present invention, a sample is sucked from the end of the needle in the analytical apparatus, aldehydes and ketones in the sample are reacted with 2,4-dinitrophenylhydrazine to obtain 2,4-dinitrophenylhydrazone derivatives, and the derivatives are then desorbed, introduced into a chromatograph and analyzed.
For desorbing the 2,4-dinitrophenylhydrazone derivatives, an elution medium is passed from the syringe and injected into the sample inlet in the chromatograph to carry out the chromatography. When the larger-volume syringe is used, the syringe may be used as it is, or may also be replaced with the smaller-volume syringe before use.

Specific examples of the preferable analyte for applying the present invention thereto include aldehydes such as formaldehyde, acetaldehyde, propionaldehyde, n-butylaldehyde, isobutylaldehyde, n-valeraldehyde, isovaleraldehyde and the like; and ketones such as acetone, methylethylketone, methylisobutylketone and the like.
Examples of the preferable chromatography for applying the present invention thereto include gas chromatography and liquid chromatography.

More specifically, the fibers coated with the hydrochloride or sulfate of 2,4-dinitrophenylhydrazine are packed in the needle, and air containing the sample is sucked. Only aldehydes and ketones in the air are reacted with the hydrochloride or sulfate of 2,4-dinitrophenylhydrazine selectively and easily to obtain the 2,4-dinitrophenylhydrazone derivatives corresponding to the aldehydes and ketones respectively. This needle is inserted into the inlet of the chromatograph, and the hydrazone derivatives are desorbed with a small amount of medium, for example acetonitrile and nitrogen gas, and introduced into the analytical apparatus directly to analyze.

### Examples

The present invention will now be described by way of examples and test examples, however, the scope of the present invention should not be restricted thereto.

### Example 1

### Preparation of Needle

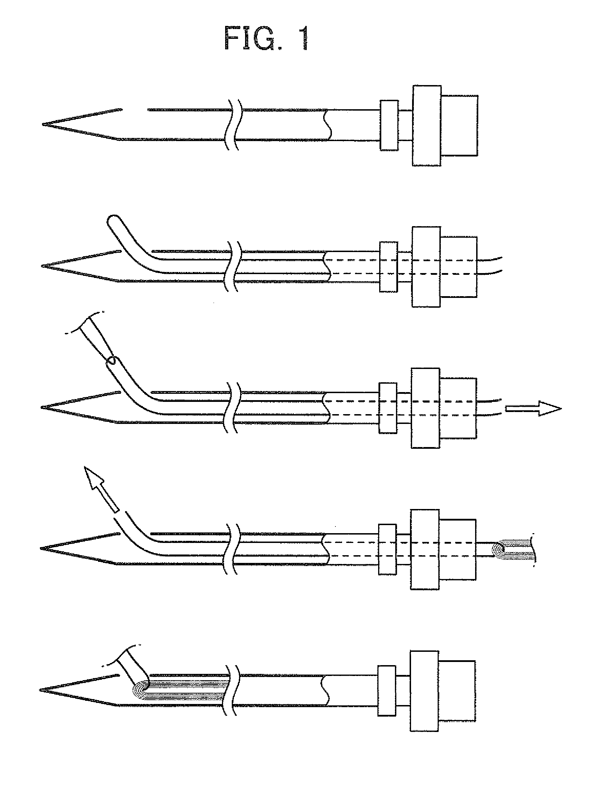

A fishing line folded into two is introduced through the cave hole into an injection needle (stainless tube with outer diameter of 0.7 mm, inner diameter of 0.5 mm, length of 85 mm) shown in Fig.1, and the fishing line is allowed to reach the opposite side (locking side). Then, 332 lines of Zylon fibers (fiber length 40 mm, fiber diameter 11 µm) coated with HR-1 (concentration 3%)(dimethyl silicone available from Shinwa Chemical Industries, Ltd) are let into the loop of the fishing line at the locking side, and then folded into two. The fishing line is then drawn from the cave hole to draw the fibers into the needle (the fiber length becomes 20 mm and the packed number becomes 664 since the fibers are folded into two).
2,4-Dinitrophenylhydrazine (DNPH) hydrochloride was dissolved in acetonitrile to prepare a solution of 100 ppm(w/v). The solution was filled in a syringe, and the syringe was attached to the fiber-packed needle. The above solution was flown at the rate of 16 µL/min for 2 to 6 minutes by using a microfeeder to allow adsorption to the fibers. Nitrogen was passed through the needle to remove the remaining excess solution.

### Method for Preparing and Collecting Gas Sample

### Formaldehyde

About 100mg of paraformaldehyde was fed into a two-necked flask, and one neck thereof was sealed with a silicone cap. The other neck thereof was attached with a condenser (to prevent the generated formaldehyde from leaking out of the fume hood), whose end was connected to a bubbler containing liquid paraffin. The flask was immersed in an oil bath and heated to about 120°C. After confirming by the bubbler that paraformaldehyde was decomposed and formaldehyde was formed, a gas-tight syringe was inserted through the silicone cap, and 1mL (this was defined as 100% formaldehyde) was collected and diluted with nitrogen in a vacuum collection bottle.

### Acetaldehyde/Propionaldehyde

After reducing the pressure in a vacuum collection bottle with a vacuum pump, the liquid sample was injected into the bottle, vaporized completely and diluted with nitrogen. Each sample was further diluted with Tedlar Bag, sucked and derivatized by using Kitagawa Precision Gas Collector.

### Condition of GC-MS

Inlet temperature: 175°C, inlet pressure: 68 kPa, split ratio: 5:1
Column temperature: formaldehyde: 100°C-250°C (1 min hold)(10°C/min) acetaldehyde: 100°C-250°C (3 min hold)(10°C/min) propionaldehyde: 100°C-255°C (3 min hold)(20°C/min)

### Injection into GC-MS

In a 500 µL gas-tight syringe, 50 µL of acetonitrile (desorbing solvent) was taken, and 250 µL of nitrogen was then sucked thereinto. The needle was attached to the syringe and, after confirming that acetonitrile was located in the downside (the needle side), the needle was inserted into the inlet of GC-MS to introduce the solvent and nitrogen.

### Results

Derivatization and analyses of formaldehyde, acetaldehyde and propionaldehyde were attained. As for acetaldehyde-DNPH, two peaks having almost the same sizes were observed, which peaks are assumed to be Syn and Anti isomers.

### Example 2

Derivatization and analysis of acetone were able to be carried out in the same manner as in Example 1.

### Brief Description of the Drawings

Fig.1 shows cross-sectional views showing an outline of a process by which the fibers are introduced into the needle.

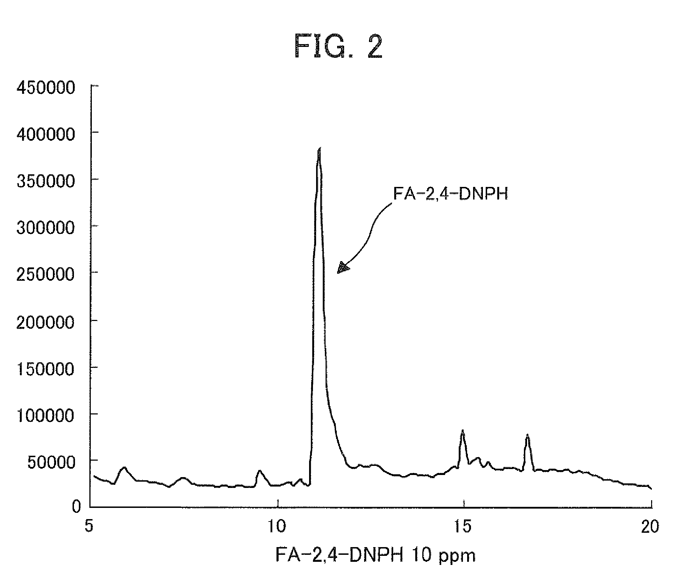

Fig.2 shows the gas chromatogram of formaldehyde measured in Example 1.

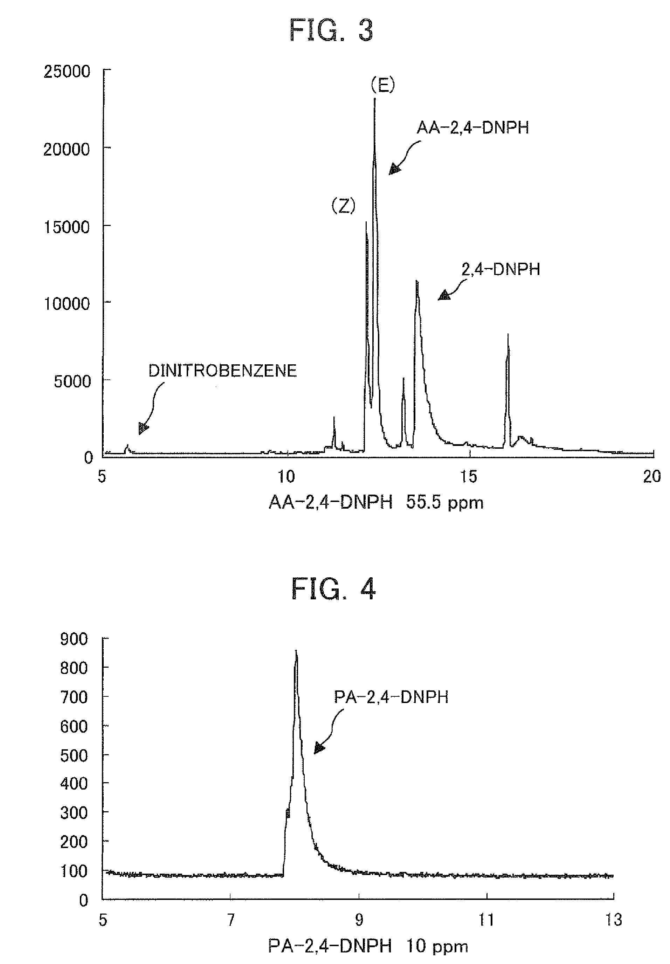

Fig.3 shows the gas chromatogram of acetaldehyde measured in Example 1.
Fig.4 shows the gas chromatogram of propionaldehyde measured in Example 1.

## Claims

1. A fiber coated with 2,4-dinitrophenylhydrazine or a salt thereof.

2. A fiber coated with hydrochloride or sulfate of 2,4-dinitrophenylhydrazine.

3. A needle for microextraction, in which the fibers according to claim 1 are packed.

4. A needle for microextraction, in which the fibers according to claim 2 are packed.

5. The needle according to claim 3, which is for extracting aldehydes and ketones.

6. The needle according to claim 4, which is for extracting aldehydes and ketones.

7. An analytical apparatus comprising said needle according to any one of claims 3 to 6 and a suction device.

8. A method for analyzing an aldehyde(s) and/or ketone(s) in a sample, **characterized by** comprising sucking a sample through said needle in the analytical apparatus according to claim 7 to allow said aldehyde(s) and ketone(s) in said sample to react with 2,4-dinitrophenylhydrazine, thereby converting them to the corresponding 2,4-dinitrophenylhydrazones; desorbing said 2,4-dinitrophenylhydrazones; and introducing the desorbed 2,4-dinitrophenylhydrazones into a chromatograph to analyze them.

9. The method according to claim 8, wherein formaldehyde in said sample is analyzed.
